# EUROPÄISCHE PATENTSCHRIFT

(11) **EP 2 144 795 B1**
(45) Veröffentlichungstag und Bekanntmachung des Hinweises auf die Patenterteilung: **11.06.2014**
(21) Anmeldenummer: 08735760.4
(22) Anmeldetag: 03.04.2008
(51) Int. Cl.: B60T 8/1766, B60T 8/26, B60T 1/10, B60L 7/18, B60T 8/48, B60T 13/68, B60W 10/08, B60W 10/184, B60W 20/00, B60W 30/18

(54) **VERFAHREN ZUM BETRIEB EINER FAHRZEUGBREMSANLAGE UND FAHRZEUGBREMSANLAGE**
METHOD FOR OPERATING A VEHICLE BRAKE SYSTEM AND VEHICLE BRAKE SYSTEM
PROCÉDÉ DE FONCTIONNEMENT D'UN SYSTÈME DE FREINAGE DE VÉHICULE ET SYSTÈME DE FREINAGE DE VÉHICULE

(30) Priorität: 05.04.2007 DE 102007016422; 03.04.2008 DE 102008017478
(43) Veröffentlichungstag der Anmeldung: 20.01.2010
(73) Patentinhaber: Continental Teves AG & Co. OHG, 60488 Frankfurt (DE)
(72) Erfinder: STÖLZL, Stephan, 69469 Weinheim (DE); FISCHER, Daniel, 65824 Schwalbach (DE); SEURER, Frank, 61118 Bad Vilbel (DE)
(86) Internationale Anmeldenummer: PCT/EP2008/054014
(87) Internationale Veröffentlichungsnummer: WO 2008/122568

(56) Entgegenhaltungen:
- WO-A-2005/110827
- WO-A1-2004/016485
- DE-A1- 19 955 094
- DE-A1-102004 061 107
- DE-B3-102004 016 288
- US-A1- 2007 018 499

## Beschreibung

Die Erfindung betrifft ein Verfahren zum Betrieb einer Fahrzeugbremsanlage, für Kraftfahrzeuge mit Hybridantrieb oder Elektroantrieb, mit vorzugsweise hydraulisch betätigbaren, ein Bremsmoment ausübenden Radbremsen an einer oder mehreren der Fahrzeugachsen, insbesondere einer Vorderachse, wobei die einer Hinterachse zugeordneten Fahrzeugräder zumindest teilweise von einem Elektromotor angetrieben werden, der zur Rückgewinnung (Rekuperation) von Bremsenergie als Generator betreibbar ist und im Generatorbetrieb eine Bremskraft (Rekuperationsmoment) an den der jeweiligen Achse zugeordneten Fahrzeugrädern ausübt, wodurch ein aus dem Bremsmoment und dem Rekuperationsmoment der elektrischen Antriebe gebildetes Rad- oder Schleppmoment entsteht, das an der Vorderachse und der Hinterachse getrennt regelbar ist.

In Fahrzeugen mit einem Hybridantrieb kann der Antrieb sowohl über einen Verbrennungsmotor als auch über einen Elektromotor erfolgen; in einem Elektrofahrzeug erfolgt der Antrieb ausschließlich durch den Elektromotor. Bei diesen Fahrzeugen sind bereits Bremssysteme bekannt, bei denen zumindest ein Teil der beim Bremsen zurück gewonnenen Energie im Fahrzeug gespeichert und für den Antrieb des Fahrzeuges wieder verwendet werden kann. Dadurch kann der Energieverbrauch des Fahrzeuges insgesamt gesenkt, der Wirkungsgrad erhöht und der Betrieb damit wirtschaftlicher gestaltet werden. Kraftfahrzeuge mit einem derartigen Bremssystem, das für sogenannte "Rekuperationsbremsungen" ausgelegt ist, weisen in der Regel verschiedene Arten von Bremsen auf, die auch "Bremsaktuatoren" genannt werden.

Für die Abbremsung der Räder der Vorderachse und/oder der Hinterachse werden üblicherweise hydraulische Reibbremsen, wie sie aus gewöhnlichen Kraftfahrzeugen bekannt sind, eingesetzt. Ggf. können für die Abbremsung der Räder der Hinterachse elektromechanisch betätigbare Reibbremsen verwendet werden. Außerdem wird ein Elektromotor verwendet, der als Generator betreibbar ist. Über den Generator bzw. den sich im Generatorbetrieb befindlichen Elektromotor wird zumindest ein Teil der gesamten Bremskraft aufgebracht. Die gewonnene elektrische Energie wird in ein Speichermedium wie beispielsweise eine Bordbatterie ein- bzw. zurückgespeist und für den Antrieb des Kraftfahrzeuges über einen geeigneten Antrieb wieder verwendet.

Bei der Abbremsung eines derartigen Kraftfahrzeuges, das einen Elektromotor als alleinigen oder zusätzlichen Antrieb aufweist, der im Generatorbetrieb zur Rückgewinnung von Bremsenergie dient, wird zusätzlich zum Bremsmoment der hydraulisch und elektromechanisch betätigbaren Radbremsen, das durch das vom Fahrer betätigte Bremssystem aufgebracht wird, ein weiteres Bremsmoment vom Elektromotor aufgebracht. Dieses Bremsmoment des Elektromotors entsteht aus dem bekannten Effekt bei Elektromotoren, die bei mechanischem Antreiben ohne Zuführung von elektrischem Strom als Dynamo bzw. Generator wirken und elektrischen Strom generieren. Dabei entsteht eine Gegenkraft, die dem mechanischen Antrieb entgegenwirkt und im vorliegenden Fall als Bremsmoment wirkt. Der als Generator betriebene Elektromotor wirkt daher ebenfalls als Bremse. Die gesamte Bremskraft des Kraftfahrzeugs setzt sich daher aus der Bremskraft der hydraulisch betätigbaren Radbremsen, der Bremskraft der elektromechanisch betätigbaren Radbremsen und der Bremskraft des als Generator wirkenden Elektromotors ("Rekuperationsmoment") zusammen und wird auch Rad- oder Schleppmoment genannt.

Aus der DE 103 19 663 A1 ist ein Verfahren zur Einstellung der Pedalkennlinie eines Hybrid-Bremssystems bei veränderter Bremskraftverteilung bekannt. Bei dem bekannten Verfahren zum Betrieb einer Bremsanlage, die ein hydraulisches und ein elektrisches Betriebsbremssystem mit Radbremsen umfasst, die bei Betätigung eines Bremspedals mit Bremsdruck beaufschlagt werden, steuert eine Steuereinrichtung einen Bremsdruckmodulator des hydraulischen Betriebsbremssystems und das elektrische Betriebsbremssystem derart an, dass bei einer Änderung der Bremskraftverteilung zwischen dem hydraulischen und dem elektrischen Betriebsbremssystem das Verhältnis von Pedalkraft und/oder Pedalweg zu dem Fahrzeug-Gesamtbremsmoment im wesentlichen konstant bleibt. Ein als Generator betreibbarer Elektromotor ist nicht vorgesehen.

Das Potential der Bremsenergie-Rückgewinnung liegt für eine kombinierte Fahrzeugbremsanlage der eingangs genannten Art und bei einer Bremskraftverteilung von Vorder- zu Hinterachse von 50% zu 50% bei entsprechenden 50%. Für den unteren Verzögerungsbereich wird es jedoch für möglich und zulässig gehalten, den Anteil der Bremskraft an der Hinterachse relativ zur Vorderachse stark zu erhöhen.

Bei Fahrzeugen mit Hybridantrieben oder Elektroantrieben wird der elektrische Generator an einer oder beiden Fahrzeugachsen aktiv, sobald der Fahrer vom Gaspedal geht oder bremst. Das dadurch entstehende Brems- oder auch Schleppmoment, das auch zur Energierückgewinnung (Rekuperation) dient, kann zu einer Reduktion des Kraftschlusses an den Fahrzeugrädern bis hin zum Verlust des Kraftschlusses führen. Tritt dies verstärkt an der Hinterachse auf, spricht man vom Überbremsen der Hinterachse. Da an einer überbremsten Hinterachse keine Seitenführungskräfte mehr übertragen werden können, führt dies zu einem Verlust an Fahrstabilität, was ein Ausbrechen oder Schleudern des Fahrzeuges zur Folge haben kann.

Ein Verfahren zum Betrieb einer Fahrzeugbremsanlage bzw eine Fahrzeugbremsanlage gemäß dem Oberbegriff des unabhängigen Anspruchs 1 bzw. 10 ist aus den Dokumenten WO 2005 110 827, US 2007 018 499 und DE 10 2004 061 107 bekannt.

Aufgabe der Erfindung ist es daher, ein Verfahren zum Betrieb einer Fahrzeugbremsanlage zur Verfügung zu stellen, durch das ein Überbremsen der Hinterachse und somit ein Verlust an Fahrstabilität des Kraftfahrzeugs verhindert wird, sowie ein entsprechende Fahrzeugbremsanlage.

Diese Aufgabe wird erfindungsgemäß durch die Merkmale des unabhängigen Anspruchs 1 insbesondere dadurch gelöst, dass ein an einer Fahrzeugachse anliegendes Rekuperationsmoment derart gesteuert oder geregelt wird, dass das an der Fahrzeugachse anliegende Schleppmoment einen dieser Achse zugeordneten Schleppmoment-Maximalwert nicht überschreitet.

Vorzugsweise ist hierbei vorgesehen, dass der Schleppmoment-Maximalwert einer Achse im Laufe des Betriebs des Kraftfahrzeugs veränderbar ist und an die veränderten Bedingungen angepasst wird. Als veränderte Bedingungen kommen beispielsweise eine Veränderung des Fahrzeug-Untergrundes (z.B. durch Regen) oder ein veränderter Fahrzeugzustand beispielsweise durch Fahren mit anderen Reifen infrage.

In einem bevorzugten Ausführungsbeispiel ist der Schleppmoment-Maximalwert jeder Hinterachse kleiner als das Minimum der an den Vorderachsen anliegenden Schleppmomente. Damit wird ein Überbremsen der Hinterachsen wirksam verhindert, weil auch bei mehreren Hinterachsen sicherstellt ist, dass die Hinterachsen nicht überbremsen und so die erforderlichen Seitenkräfte zur Gewährleistung der Stabilität des Kraftfahrzeugs liefern können.

Im Bereich geringer Fahrzeugverzögerungen wird der Anteil der insgesamt aufgebrachten Bremskraft, d.h. der vom Fahrer gewünschten oder vom Bremssystem geforderten Bremskraft, einschließlich der durch die Rekuperation aufgebrachten Bremskraft, erfindungsgemäß derart auf die Fahrzeugachsen verteilt, dass der Anteil der gesamten Bremskraft, der an den Fahrzeugrädern der mindestens einen Hinterachse anliegt, größer ist als der Anteil der gesamten Bremskraft, der an den Fahrzeugrädern der Vorderachse anliegt.

Dabei kann der Anteil der Bremskraft, der an den Fahrzeugrädern der Hinterachse anliegt, ausschließlich oder nahezu ausschließlich durch den sich im Generatorbetrieb befindlichen Elektromotor erzeugt werden.

Hierbei ist erfindungsgemäß vorgesehen, dass die Bremskraft an den hydraulischen Radbremsen zwischen 0% und 49% der Bremskraft für das gesamte Kraftfahrzeug beträgt, während die durch den sich im Generatorbetrieb befindenden Elektromotor erzeugte Bremskraft zwischen 51% und 100% der Bremskraft für das gesamte Kraftfahrzeug beträgt.

Da sich die Fahrstabilität an der jeweiligen Achse maßgeblich aus dem an den Rädern anliegenden Reibwert bestimmt, wird erfindungsgemäß der Schleppmoment-Maximalwert jeder Hinterachse abhängig davon bestimmt, ob ein an einer Vorderachse anliegender geschätzter zukünftiger Reibwert einen der jeweiligen Vorderachse zugeordneten Reibwert-Sollwert überschreitet. Der Schleppmoment-Maximalwert für eine Hinterachse kann dabei aus den an einer Vorderachse anliegenden Reibwerten mittels des Abstands von mindestens einem vorgegebenen weiteren Reibwert-Sollwert oder einer in einem Reibwertintervall definierten Kennlinie oder mittels einer physikalischen Berechnung des Schleppmoment-Maximalwerts aus dem Reibwert oder den Reibwerten der Vorderachse bestimmt werden.

In Weiterbildung dieses Erfindungsgedankens ist vorgesehen, dass der an einer Vorderachse anliegende geschätzte zukünftige Reibwert aus einer Überwachung der Raddrehzahlen mit einem Schlupfmodell und/oder einer Überwachung der Raddrehzahlen mit einem Schwingungsmodell und/oder einer Überwachung der Raddynamik und/oder einem Fahrdynamikbeobachter und/oder einer Fahrzeug-zu-Fahrzeug-Kommunikation und/oder einer Fahrzeug-zu-Infrastruktur-Kommunikation und/oder einem Sensor zur Ermittlung einer Reibwertinformation bestimmt wird. Bei der Fahrzeug-zu-Fahrzeug- und/oder der Fahrzeug-zu-Infrastruktur-Kommunikation werden externe Informationen verwendet, mit denen Rückschlüsse auf ein Überbremsen der Hinterachse gezogen werden können. Bei diese Informationen kann es sich z.B. um Reibwert- oder Glätteinformationen oder Informationen über Gefahrensituationen (Unfälle, Staus) handeln. Ein Fahrdynamikbeobachter überwacht mit den ihm zur Verfügung stehenden Sensorgrößen (z.B. ESP-Sensorik) das Kraftfahrzeug und schätzt den zugehörigen Reibwert.

In einem weiteren Ausführungsbeispiel erfolgt die Steuerung und/oder Regelung des an der jeweiligen Achse anliegenden Schleppmoments dadurch, dass mindestens eine Raddynamik-Kenngröße im Hinblick auf einen Kraftschlussabriss zwischen Reifen und Untergrund überwacht wird, beispielsweise die Raddrehzahl, die Radbeschleunigung, die Fahrzeuglängsbeschleunigung, die Fahrzeuggeschwindigkeit und/oder die Radlast. Das Auftreten eines Kraftschlussabrisses lässt sich beispielsweise durch eine sprunghafte Erhöhung der Drehgeschwindigkeit des betroffenen Fahrzeugrades erkennen. Ein Kraftschlussabriss hat zur Folge, dass auch der der entsprechenden Achse zuzuordnende Schleppmoment-Maximalwert überschritten ist. In einem solchen Fall wird zunächst das an dieser Achse anliegenden Schleppmoment dadurch reduziert, dass der Rekuperationsanteil der Bremskraft für diese Achse verringert wird. Falls an der Achse kein Rekuperationsmoment anliegt oder das Rekuperationsmoment bereits maximal reduziert ist, wird dann die an der Achse anliegende konventionelle Bremskraft verringert. Insbesondere ist es von Vorteil, wenn das System (Rekuperationsanteil oder Anteil der konventionellen Bremskraft) mit der höheren Dynamik reduziert wird, so dass das Fahrzeugrad schnell aus dem Bereich des drohenden Kraftschlussabriss gebracht wird und ein stabiler Zustand erreicht wird. In Bezug auf die Radlast ist festzustellen, dass der Schleppmoment-Maximalwert auch von dieser abhängt, da die Radlast die vertikal auf den Berührungsbereich zwischen Fahrbahn und Fahrzeugrad wirkende Kraft bestimmt.

Alle auf ein Kraftfahrzeug einwirkenden Kräfte werden auf die Reifen übertragen. Diese Kraftübertragung wird charakterisiert durch den Kraftschlussbeiwert oder auch Umfangskraftbeiwert. Er ist definiert als Quotient aus Reifenumfangskraft und Radlast und ist stark abhängig von verschiedenen Einflüssen wie beispielsweise Fahrbahntextur, Fahrbahnbedeckung, Fahrgeschwindigkeit, Temperatur, Flächenpressung, Innendruck des Reifens, Profiltiefe, Reifenschräglauf, Reifenart. Die dabei auftretende Reibung ist neben den genannten Einflüssen abhängig vom Reifenschlupf. Dieser ist bei Bremsvorgängen von großer Bedeutung.

Als Reifenschlupf wird das Verhältnis eines angetriebenen Reifens zu einem leer mitlaufenden Rad bezeichnet, wobei der Schlupf im Falle des Bremsens zwischen 0% (leer mitlaufendes Rad und angetriebener Reifen drehen sich gleich schnell) und 100% (Blockieren der Fahrzeugräder) liegt. Bei einem Schlupfwert, der meist unter 15% liegt, hat die Reibwert-Schlupf-Kurve und die auch Umfangskraftbeiwert- oder Kraftschlussbeiwert-Schlupf-Kurve ein Maximum, in dem die Kraftübertragung des Reifens auf den Untergrund optimal ist, wobei allerdings bei Überschreiten dieses Maximums der Kraftschlussabriss und damit ein Blockieren der Fahrzeugräder auftritt. Deshalb wird mittels einer Schlupfregelung der Schlupf so geregelt, dass der Schlupf unterhalb dieses Maximalwerts bleibt.

Verfügt das Kraftfahrzeug zumindest an einer Hinterachse über eine Schlupfregelung, so erfolgt die Steuerung und/oder Regelung des an der jeweiligen Achse anliegenden Schleppmoments in vorteilhafter Weise über einen Schlupfregler, mit dem der an einem Fahrzeugrad einer Hinterachse anliegende Schlupf im Hinblick auf einen Kraftschlussabriss zwischen Reifen und Untergrund mit Hilfe der Fahrzeuggeschwindigkeit und der Radgeschwindigkeit überwacht wird. Durch die hierdurch erfolgende Einregelung des Schlupfes wird ein Kraftschlussabriss an den entsprechenden Achsen verhindert. In Fortbildung dieses Erfindungsgedankens wird der an den entsprechenden Fahrzeugrädern anliegende Schlupf um das Maximum des Reibwerts in der Reibwert-Schlupf-Kurve geregelt.

Vorzugsweise erfolgt die Überwachung des Schlupfes an einem Fahrzeugrad derart, dass der Schlupf entweder auf einen vorbestimmten, dem jeweiligen Fahrzeugrad zugeordneten Schlupf-Sollwert eingeregelt wird oder bei einer Steuerung der Schlupf-Maximalwert aufgrund einer Reibwert-Schätzung zu den Fahrzeugrädern der jeweiligen Achse bestimmt wird. Hierbei kann die zur Schlupfberechnung notwendige Fahrzeuggeschwindigkeit aus typischen Fahrzeugsensoren (z.B. über die Raddrehzahl) geschätzt oder mit einem Sensor zur Messung der absoluten Fahrzeuggeschwindigkeit gemessen werden. Bei Anliegen eines kombinierten Bremsmoments und Rekuperationsmoments ist in Abhängigkeit der Dynamik des Bremssystems und des Rekuperationssystems zu entscheiden, welches Moment moduliert wird, um ein Überbremsen der Hinterachse zu verhindern.

Gemäß der Erfindung erfolgt die Steuerung und/oder Regelung des an einer Fahrzeugachse anliegenden Schleppmoments dadurch, dass zunächst nur an der Vorderachse des Kraftfahrzeugs ein Schleppmomentimpuls und/oder ein Bremsmomentimpuls aufgebracht wird und dass danach aus der Analyse des sich an der jeweiligen Achse einstellenden Momenten-, Schlupf-, Reibwert- und/oder Raddynamikverhaltens des Kraftfahrzeugs die optimale Schlupfmomentverteilung für die Vorderachse und die Hinterachse bestimmt und eingestellt wird. Dabei kann vorzugsweise zunächst das gesamte Schleppmoment über die Vorderachse abgesetzt und dann anschließend auf die Vorderachse und die Hinterachse verteilt werden

Das erfindungsgemäße Verfahren lässt sich mit einer Fahrzeugbremsanlage realisieren, die insbesondere für Kraftfahrzeuge mit Hybridantrieb oder Elektroantrieb bestimmt sind, mit vorzugsweise hydraulisch betätigbaren Radbremsen an einer ersten Fahrzeugachse, insbesondere der Vorderachse, und mit vorzugsweise elektromechanisch betätigbaren Radbremsen insbesondere an einer zweiten oder mehreren der Fahrzeugachsen, insbesondere an der Hinterachse, sowie mit einer Steuer- und/oder Regeleinheit, wobei insbesondere die der Hinterachse zugeordneten Fahrzeugräder zumindest teilweise von einem Elektromotor angetrieben werden, der zur Rückgewinnung (Rekuperation) von Bremsenergie als Generator betreibbar ist und im Generatorbetrieb eine Bremskraft (Rekuperationsmoment)an den der jeweiligen Achse zugeordneten Fahrzeugrädern ausübt, wodurch ein aus dem Bremsmoment und dem Rekuperationsmoment der elektrischen Antriebe gebildetes Schleppmoment entsteht, das an der Vorderachse und der Hinterachse getrennt regelbar ist, und bei der die Steuer- und/oder Regeleinheit ein an einer Fahrzeugachse anliegendes Rekuperationsmoment derart steuert oder regelt, dass das an der Fahrzeugachse anliegende Schleppmoment einen dieser Achse zugeordneten Schleppmoment-Maximalwert nicht überschreitet.

Weitere Merkmale, Vorteile und Anwendungsmöglichkeiten der Erfindung ergeben sich aus der nachfolgenden Beschreibung eines Ausführungsbeispiels, das in einer einzigen Figur dargestellt ist.

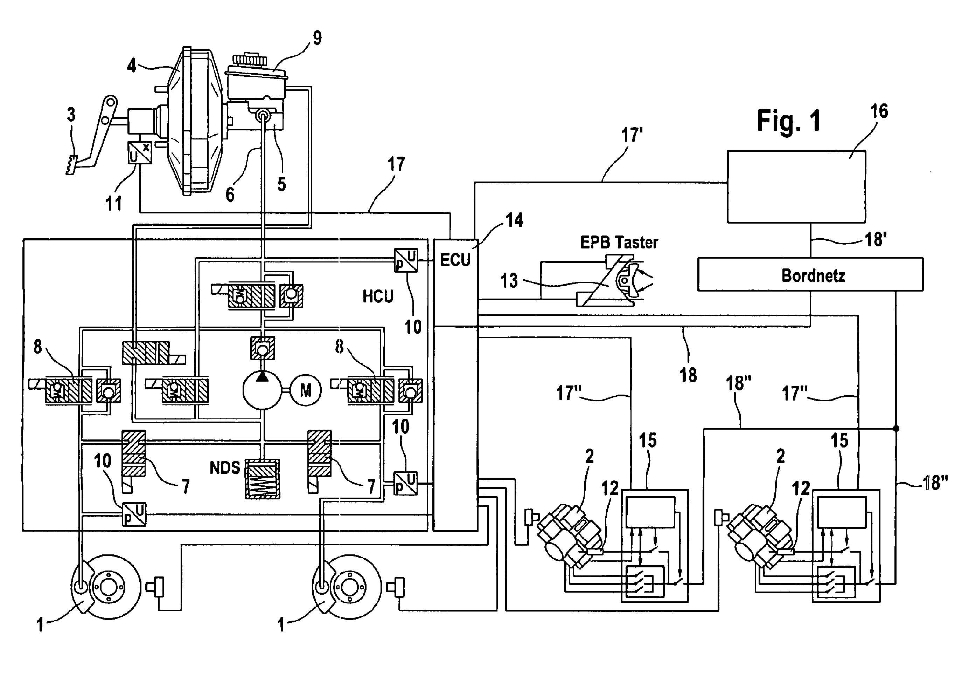

Die Fig. 1 zeigt einen Schaltplan einer kombinierten erfindungsgemäßen Fahrzeugbremsanlage mit hydraulisch betätigbaren Radbremsen an der Vorderachse, elektromechanisch betätigbaren Radbremsen an der Hinterachse und einem Elektromotor für rekuperative Bremsungen.

Die in dem Schaltplan schematisch dargestellte Fahrzeugbremsanlage, mit der das vorliegende Verfahren durchführbar ist, weist hydraulisch betätigbare Radbremsen 1 und elektromechanisch betätigbare Radbremsen 2 auf. Die hydraulisch betätigbaren Radbremsen 1 sind an einer ersten Achse, der Vorderachse des Kraftfahrzeugs angeordnet und werden mit Hilfe eines pedalbetätigten Vakuum-Bremskraftverstärkers 4 mit nachgeschaltetem Hauptzylinder 5 mit hydraulischem Druckmittel beaufschlagt. Zu diesem Zweck sind die hydraulisch betätigbaren Radbremsen 1 unter Zwischenschaltung von Einlassventilen 8 über eine Hydraulikleitung 6 mit dem Hauptzylinder 5 verbunden. Bei einem Druckabbau wird das eingesteuerte Druckmittel über Auslassventile 7 in einen drucklosen Druckmittelvorratsbehälter 9 abgelassen. Zur Ermittlung des eingesteuerten hydraulischen Drucks und zur Durchführung von Regelvorgängen, wie etwa Blockierschutzregelungen, sind mehrere Drucksensoren 10 vorgesehen, deren Ausgangssignale einer zentralen Steuer- und Regeleinheit 14 zugeführt werden.

Wie Fig. 1 weiterhin entnehmen ist, sind an einer zweiten Achse, der Hinterachse des Kraftfahrzeugs, elektromechanisch betätigbare Radbremsen 2 angeordnet, die nach Maßgabe des in den hydraulisch betätigbaren Radbremsen 1 eingesteuerten hydraulischen Drucks betätigbar sind. Wie bereits erwähnt, wird der in die hydraulisch betätigbaren Radbremsen 1 eingesteuerte Druck mit Hilfe der Drucksensoren 10 ermittelt. Auf Grundlage dieses Druckwertes werden die elektromechanisch betätigbaren Radbremsen 2 an der Hinterachse angesteuert, d.h. unter Berücksichtigung einer Bremskraftverteilungsfunktion zwischen Vorder- und Hinterachse wird eine Zuspannkraft der elektromechanisch betätigbaren Radbremsen 2 eingestellt. Außerdem können die elektromechanisch betätigbaren Radbremsen 2 nach Maßgabe des Betätigungsweges des Bremspedals 3, d.h. gemäß dem Wunsch des Fahrzeugführers, angesteuert werden. Dazu wird der Betätigungsweg des Bremspedals 3 mit Hilfe eines Pedalwegsensors 11 ermittelt. Die Ansteuerung der elektromechanisch betätigbaren Radbremsen 2 wird dezentral durch zwei elektronische Steuereinheiten 15 vorgenommen, die je einer elektromechanisch betätigbaren Radbremse 2 zugeordnet sind. Die Versorgung mit elektrischer Energie erfolgt über eine Versorgungsleitung 18'', die die elektromechanisch betätigbaren Radbremsen 2 mit dem Bordnetz verbindet.

Wie in Fig.1 lediglich schematisch angedeutet ist, weisen die elektromechanisch betätigbaren Radbremsen 2 eine Feststellbremsvorrichtung 12 auf, mit der die Radbremsen zur Durchführung einer Feststellbremsung im zugespannten Zustand verriegelbar sind. Die Feststellbremsvorrichtung 12 ist mit Hilfe eines als elektromechanisch betätigbare Radbremse (EPB) ausgebildetes Bedienelementes 13 ansteuerbar. Das Bedienelement 13 ist als Taster ausgebildet und weist drei Schaltstellungen für die Befehle "Spannen", "Neutral" und "Lösen" auf, wobei lediglich die mittlere Neutralstellung eine stabile Schaltstellung darstellt.

Der Fahrerbremswunsch wird, wie bereits erwähnt, von dem Pedalwegsensor 11 erfasst und über eine Signalleitung 17 der elektronischen Steuer- und Regeleinheit 14 zugeführt. Der Steuer- und Regeleinheit 14 werden außerdem die Signale des Bedienelements 13 der Feststellbremse zugeführt. Die beiden dezentralen elektronischen Steuereinheiten 15 der elektromechanisch betätigbaren Radbremsen 2 sind ebenfalls über eine Signalleitung 17'' mit der Steuer- und Regeleinheit 14 verbunden.

Ein Elektromotor 16, der einerseits als alleiniger Antrieb bei einem Elektroauto oder als zusätzlicher Antrieb bei einem Fahrzeug mit Verbrennungsmotor wirkt und andererseits im Generatorbetrieb zur Rückgewinnung von Bremsenergie eingesetzt wird, ist über eine weitere Signalleitung 17' mit der Steuer- und Regeleinheit 14 verbunden. Der Elektromotor 16 bezieht seine Versorgungsspannung im Antriebsfall über eine Versorgungsleitung 18' aus dem Bordnetz und speist über dieselbe Versorgungsleitung 18' im Generatorbetrieb elektrische Energie in das Bordnetz zurück. Im eben erwähnten Generatorbetrieb wirkt der Elektromotor 16 als Dynamo und generiert elektrischen Strom. Dabei entsteht eine Gegenkraft, die als ein weiteres Bremsmoment (Rekuperationsmoment) wirkt. Der als Generator betriebene Elektromotor 16 wirkt hierbei als Bremse. Die gesamte Bremskraft des Kraftfahrzeugs setzt sich daher aus der Bremskraft der hydraulisch betätigbaren Radbremsen 1, der Bremskraft der elektromechanisch betätigbaren Radbremsen 2 und der Bremskraft des als Generator wirkenden Elektromotors 16 zusammen. Diese drei Bremskräfte müssen in einer geeigneten Art und Weise angepasst werden, was durch eine geeignete Bremskraftverteilung ermöglicht wird.

Dies erfolgt durch die Steuer- und Regeleinheit 14. Diese ermittelt anhand des von dem Pedalwegsensor 11 erfassten Bremswunsches des Fahrers und der verschiedenen äußeren Einflüsse die gesamte gewünschte oder erforderliche Bremskraft und verteilt diese auf die hydraulisch betätigbaren Radbremsen 1, die elektromechanisch betätigbaren Radbremsen 2 und den in Rekuperation betriebenen Elektromotor 16. Dabei wird das an mindestens einer Achse anliegende Rekuperationsmoment derart geregelt, dass das an dieser Achse anliegende Schleppmoment einen dieser Achse zugeordneten Schleppmoment-Maximalwert nicht überschreitet.

Weil die Hinterachse damit immer auf ein geringeres Schleppmoment einregelbar ist als das, das an der Vorderachse anliegt, wird ein Überbremsen der Hinterachse und somit ein Verlust an Fahrstabilität verhindert.

Das Überbremsen der Räder kann durch steuernde oder regelnde Eingriffe vermieden werden. Bei steuernden Eingriffen wird ein maximaler Schlupf vorgegeben. Der maximale Schlupf kann dabei fest eingestellt werden und aus einer Reibwertschätzung oder dgl. resultieren. Bei regelnden Eingriffen wird aufgrund diverser Zustandsgrößen das Systemverhalten der Reifen überwacht. Allen Ansätzen ist die Anpassung des Radschlupfs in der Regel durch eine Reduktion des Moments gemein. Liegt ein kombiniertes Brems- und Rekuperationsmoment an, so ist in Abhängigkeit von der Dynamik des Bremssystems und des Rekuperationssystems zu entscheiden, welches Moment moduliert wird, um ein Überbremsen zu verhindern.

Die Reibwertinformation kann dabei aus verschiedenen Quellen stammen:
- Überwachung der Raddrehzahlen mit einem Schlupfmodell
- Überwachung der Raddrehzahlen mit einem Schwingungsmodell
- Überwachung der Raddynamik
- Fahrdynamikbeobachter, der mit den zur Verfügung stehenden Sensorgrößen (z.B. ESP-Sensorik) das Fahrzeug überwacht und den Reibwert schätzt.
- Fahrzeug-zu-Fahrzeug-Kommunikation / Fahrzeug-zu-Infrastruktur-Kommunikation (Verwendung externer Informationen, mit denen Rückschlüsse auf ein Überbremsen der Hinterachse geschlossen werden können, z.B. Reibwert- oder Glätteinfo bzw. erkannte Gefahrensituationen (Unfälle, Staus, etc.)
- Verwendung mindestens eines Sensors zur Ermittlung von mindestens einer Reibwertinfo (z.B. Reibwert hoch oder Reibwert niedrig).

Die Hinterachse kann auch über eine Überwachung der Raddynamik verfügen. Durch die Überwachung der Raddynamik (Drehzahl, Drehbeschleunigung, Fahrzeugszustandsgrößen) wird ein Kraftschlussabriss der Reifen verhindert.

Schließlich kann mindestens die Hinterachse über einen Schlupfregler verfügen. Mit Hilfe der Fahrzeuggeschwindigkeit und der Radgeschwindigkeit kann der Radschlupf genau bestimmt und geregelt werden. Durch die Einregelungen eines bestimmten Schlupfes wird ein Kraftschlussabriss der Reifen verhindert. Der Schlupf kann dabei entweder fest vorgegeben oder mit Ergebnissen einer Reibwertschätzung angepasst werden. Die Fahrzeuggeschwindigkeit kann aus den Messergebnissen typischer Fahrzeugsensoren geschätzt oder mit einem Sensor zur Messung der absoluten Fahrzeuggeschwindigkeit gemessen werden.

Es kann aber zunächst auch nur an der Vorderachse ein Schleppmoment oder ein Momentenimpuls aufgebracht werden. Durch die Analyse der Schlupfvorgänge an der Vorderachse (Kräfte, Raddynamik, Reibwert) wird die optimale Schlupfmomentverteilung für die Vorder- und Hinterachse bestimmt und eingestellt. Hierbei ist es denkbar, zunächst das gesamte gewünschte Schleppmoment über die Vorderachse abzusetzen und dann anschließend zu verteilen.

## Patentansprüche

1. Verfahren zum Betrieb einer Fahrzeugbremsanlage, für Kraftfahrzeuge mit Hybridantrieb oder Elektroantrieb, mit vorzugsweise hydraulisch betätigbaren, ein Bremsmoment ausübenden Radbremsen an einer oder mehreren der Fahrzeugachsen, insbesondere einer Vorderachse, wobei die einer Hinterachse zugeordneten Fahrzeugräder zumindest teilweise von einem Elektromotor angetrieben werden, der zur Rekuperation von Bremsenergie als Generator betreibbar ist und im Generatorbetrieb ein Rekuperationsmoment an den der jeweiligen Achse zugeordneten Fahrzeugrädern ausübt, wodurch ein aus dem Bremsmoment und dem Rekuperationsmoment der elektrischen Antriebe gebildetes Schleppmoment entsteht, das an der Vorderachse und der Hinterachse getrennt regelbar ist, wobei ein an einer Fahrzeugachse anliegendes Rekuperationsmoment derart gesteuert oder geregelt wird, dass das an der Fahrzeugachse anliegende Schleppmoment einen dieser Achse zugeordneten Schleppmoment-Maximalwert nicht überschreitet, **dadurch gekennzeichnet, dass**
der Schleppmoment-Maximalwert jeder Hinterachse abhängig davon bestimmt wird, ob ein an einer Vorderachse anliegender geschätzter Reibwert einen der jeweiligen Vorderachse zugeordneten Reibsollwert überschreitet, wobei die Steuerung und/oder Regelung des an einer Fahrzeugachse anliegenden Schleppmoments dadurch erfolgt, dass an der Vorderachse des Kraftfahrzeugs ein
Schleppmomentimpuls und/oder ein Bremsmomentimpuls aufgebracht wird und dass sich aus der Analyse des sich an der jeweiligen Achse einstellenden Schlupf-, Reibwert- und/oder Raddynamikverhaltens des Kraftfahrzeugs die optimale Schleppmomentverteilung zwischen der Vorderachse und der Hinterachse bestimmt und eingestellt wird.

2. Verfahren nach Anspruch 1, **dadurch gekennzeichnet, dass** zusätzlich eine Überwachung der Raddrehzahlen mit einem Schlupfmodell und/oder eine Überwachung der Raddynamik und/oder ein Fahrdynamikbeobachter und/oder ein Fahrzeug-zu-Infrastruktur-Kommunikation und/oder ein Sensor zur Ermittlung einer Reibwertinformation und/oder einer Überwachung der Raddrehzahlen mit einem Schwingungsmodell und/oder einer Fahrzeug-zu-FahrzeugKommunikation bei der Bestimmung des an einer Vorderachse anliegenden geschätzten Reibwerts berücksichtigt wird.

3. Verfahren nach Anspruch 1 oder 2, **dadurch gekennzeichnet, dass** der Schleppmoment-Maximalwert einer Achse im Laufe des Betriebs des Kraftfahrzeugs veränderbar ist.

4. Verfahren nach einem der Ansprüche 1 bis 3, **dadurch gekennzeichnet, dass** der Schleppmoment-Maximalwert jeder Hinterachse kleiner ist als das Minimum der an den Vorderachsen anliegenden Schleppmomente.

5. Verfahren nach einem der vorhergehenden Ansprüche, **dadurch gekennzeichnet, dass** im Bereich geringer Fahrzeugverzögerungen die gesamte aufgebrachte Bremskraft, d.h. die vom Fahrer gewünschte oder vom Bremssystem geforderte Bremskraft, einschließlich der durch die Rekuperation aufgebrachten Bremskraft, derart auf die Fahrzeugachsen verteilt wird, dass der Anteil der gesamten Bremskraft, der an den Fahrzeugrädern der mindestens einen Hinterachse anliegt, größer ist als der Anteil der gesamten Bremskraft, der an den Fahrzeugrädern der Vorderachse anliegt.

6. Verfahren nach einem der vorhergehenden Ansprüche, **dadurch gekennzeichnet, dass** die Steuerung und/oder Regelung des an der jeweiligen Achse anliegenden Schleppmoments dadurch erfolgt, dass mindestens eine Raddynamik-Kenngröße im Hinblick auf einen Kraftschlussabriss zwischen Reifen und Untergrund überwacht wird, beispielsweise die Drehzahl, die Drehbeschleunigung, die Fahrzeuggeschwindigkeit und/oder die Radlast.

7. Verfahren nach einem der vorhergehenden Ansprüche, **dadurch gekennzeichnet, dass** die Steuerung und/oder Regelung des an der jeweiligen Achse anliegenden Schleppmoments über einen Schlupfregler erfolgt, mit dem der an einem Fahrzeugrad einer Hinterachse anliegende Schlupf im Hinblick auf einen Kraftschlussabriss zwischen Reifen und Untergrund überwacht wird.

8. Verfahren nach Anspruch 6, **dadurch gekennzeichnet, dass** die Überwachung des Schlupfes an einem Fahrzeugrad derart erfolgt, dass der Schlupf entweder auf einen vorbestimmten, dem jeweiligen Fahrzeugrad zugeordneten Schlupf-Sollwert eingeregelt wird oder der Schlupf-Maximalwert aufgrund einer Reibwert-Schätzung zu den Fahrzeugrädern der jeweiligen Achse bestimmt wird.

9. Verfahren nach mindestens einem der vorhergehenden Ansprüche, **dadurch gekennzeichnet, dass** zunächst das gesamte gewünschte oder erforderliche Schleppmoment über die Vorderachse abgestützt und dann anschließend auf die Vorderachse und die Hinterachse verteilt wird.

10. Fahrzeugbremsanlage, für Kraftfahrzeuge mit Hybridantrieb oder Elektroantrieb, mit vorzugsweise hydraulisch betätigbaren, ein Bremsmoment ausübenden Radbremsen (1,2) an einer oder mehreren der Fahrzeugachsen, insbesondere einer Vorderachse, sowie mit einer Steuer- und/oder Regeleinheit (14), wobei die einer Hinterachse zugeordneten Fahrzeugräder zumindest teilweise von einem Elektromotor (16) angetrieben werden, der zur Rekuperation von Bremsenergie als Generator betreibbar ist und im Generatorbetrieb ein Rekuperationsmoment an den der jeweiligen Achse zugeordneten Fahrzeugrädern ausübt, wodurch ein aus dem Bremsmoment und dem Rekuperationsmoment der elektrischen Antriebe gebildetes Schleppmoment entsteht, das an der Vorderachse und der Hinterachse getrennt regelbar ist, **dadurch gekennzeichnet, dass**
die Steuer- und/oder Regeleinheit (14) ein an einer Fahrzeugachse anliegendes Rekuperationsmoment derart steuert oder regelt, dass das an der Fahrzeugachse anliegende Schleppmoment einen dieser Achse zugeordneten Schleppmoment-Maximalwert nicht überschreitet, wobei ein Verfahren gemäß einem der Ansprüche 1 bis 9 durchgeführt wird.

## Claims

1. Method for operating a vehicle brake system, for motor vehicles having a hybrid drive or electric drive, having wheel brakes which can preferably be activated hydraulically and apply a braking torque, on one or more of the vehicle axles, in particular a front axle, wherein the vehicle wheels which are assigned to a rear axle are driven at least partially by an electric motor which can be operated as a generator in order to recuperate braking energy, and in the generator mode applies a recuperation torque at the vehicle wheels which are assigned to the respective axle, as a result of which a drag torque which is formed from the braking torque and the recuperation torque of the electric drives is produced, which drag torque can be controlled separately at the front axle and the rear axle, wherein a recuperation torque which is present at a vehicle axle is subject to open-loop or closed-loop control in such a way that the drag torque which is present at the vehicle axle does not exceed a drag torque maximum value which is assigned to this axle, **characterized in that**
the drag torque maximum value of each rear axle is determined as a function of whether an estimated coefficient of friction which is present at a front axle exceeds a setpoint coefficient of friction which is assigned to the respective front axle, wherein the open-loop and/or closed-loop control of the drag torque which is present at a vehicle axle is carried out in such a way that a drag torque pulse and/or a braking torque pulse is applied to the front axle of the motor vehicle, and **in that** the optimum drag torque distribution between the front axle and the rear axle is determined and set on the basis of the analysis of the behaviour of the slip, coefficient of friction and/or wheel dynamics of the motor vehicle occurring at the respective axle.

2. Method according to Claim 1, **characterized in that**, in addition, monitoring of the wheel rotational speeds with a slip model and/or monitoring of the wheel dynamics and/or a vehicle dynamics observer and/or a vehicle-to-infrastructure communication and/or a sensor for determining a coefficient of friction information item and/or monitoring of the wheel speeds with a vibration model and/or vehicle-to-vehicle communication are taken into account in the determination of the estimated coefficient of friction which is present at a front axle.

3. Method according to Claim 1 or 2, **characterized in that** the drag torque maximum value of one axle can be changed in the course of the operation of the motor vehicle.

4. Method according to one of Claims 1 to 3, **characterized in that** the drag torque maximum value of each rear axle is smaller than the minimum of the drag torques which are present at the front axles.

5. Method according to one of the preceding claims, **characterized in that** in the region of low vehicle decelerations the entire braking force which is applied, i.e. the braking force which is desired by the driver and is requested by the brake system, including the braking force which is applied by the recuperation, is distributed to the vehicle axles in such a way that the portion of the entire braking force which is present at the vehicle wheels of the at least one rear axle is greater than the portion of the entire braking force which is present at the vehicle wheels of the front axle.

6. Method according to one of the preceding claims, **characterized in that** the open-loop and/or closed-loop control of the drag torque which is present at the respective axle is carried out in such a way that at least one wheel dynamics characteristic variable, for example the rotational speed, the rotational acceleration, the vehicle speed and/or the wheel load, is monitored with respect to a sudden decline in adhesion between the tyre and the underlying surface.

7. Method according to one of the preceding claims, **characterized in that** the open-loop and/or closed-loop control of the drag torque which is present at the respective axle is carried out by means of a slip controller with which the slip which is present at a vehicle wheel of a rear axle is monitored with respect to a sudden decline in adhesion between the tyre and the underlying surface.

8. Method according to Claim 6, **characterized in that** the monitoring of the slip at a vehicle wheel is carried out in such a way that the slip is adjusted either to a predetermined slip setpoint value which is assigned to the respective vehicle wheel, or the maximum value of the slip is determined on the basis of estimating the coefficient of friction with respect to the vehicle wheels of the respective axle.

9. Method according to at least one of the preceding claims, **characterized in that** firstly the entire desired or necessary drag torque is supported via the front axle, and then distributed subsequently to the front axle and the rear axle.

10. Vehicle brake system, for motor vehicles having a hybrid drive or electric drive, having wheel brakes (1, 2) which can preferably be activated hydraulically and apply a braking torque, on one or more of the vehicle axles, in particular a front axle, as well as having an open-loop and/or closed-loop control unit (14), wherein the vehicle wheels which are assigned to a rear axle are driven at least partially by an electric motor (16) which can be operated as a generator in order to recuperate braking energy, and in the generator mode applies a recuperation torque at the vehicle wheels which are assigned to the respective axle, as a result of which a drag torque which is formed from the braking torque and the recuperation torque of the electric drives is produced, which drag torque can be controlled separately at the front axle and the rear axle, **characterized in that**
the open-loop and/or closed-loop control unit (14) performs open-loop or closed-loop control of a recuperation torque which is present at a vehicle axle in such a way that the drag torque which is present at the vehicle axle does not exceed a drag torque maximum value which is assigned to this axle, wherein a method is carried out according to one of Claims 1 to 9.

## Revendications

1. Procédé pour faire fonctionner un système de freinage de véhicule pour véhicules automobiles à entraînement hybride ou à entraînement électrique, avec des freins de roue de préférence à commande hydraulique, exerçant un couple de freinage, au niveau de l'un ou de plusieurs des essieux du véhicule, en particulier au niveau d'un essieu avant, les roues du véhicule associées à un essieu arrière étant entraînées au moins en partie par un moteur électrique qui peut fonctionner en tant que générateur pour la récupération d'énergie de freinage et qui exerce, en mode de générateur, un couple de récupération au niveau des roues du véhicule associées à l'essieu respectif, de sorte qu'il se produise un couple de traînée constitué du couple de freinage et du couple de récupération des entraînements électriques, lequel peut être régulé de manière séparée au niveau de l'essieu avant et de l'essieu arrière, un couple de récupération s'appliquant à un essieu du véhicule étant commandé ou régulé de telle sorte que le couple de traînée s'appliquant à l'essieu du véhicule ne dépasse pas une valeur maximale de couple de traînée associée à cet essieu, **caractérisé en ce que**
la valeur maximale du couple de traînée de chaque essieu arrière est déterminée en fonction du fait qu'un coefficient de friction estimé s'appliquant à un essieu avant dépasse ou non une valeur de consigne de friction associée à l'essieu avant respectif, la commande et/ou la régulation du couple de traînée s'appliquant à un essieu du véhicule se produisant par le fait qu'une impulsion de couple de traînée et/ou une impulsion de couple de freinage sont appliquées à l'essieu avant du véhicule automobile, et que suite à l'analyse du comportement de glissement, de coefficient de friction et/ou de dynamique des roues du véhicule automobile s'établissant au niveau de l'essieu respectif, la répartition optimale du couple de traînée entre l'essieu avant et l'essieu arrière est déterminée et ajustée.

2. Procédé selon la revendication 1, **caractérisé en ce que** l'on tient compte en outre d'un contrôle des vitesses de rotation des roues avec un modèle de glissement et/ou d'un contrôle de la dynamique des roues et/ou d'un observateur de la dynamique de conduite et/ou d'une communication du véhicule à l'infrastructure et/ou d'un capteur pour déterminer une information de coefficient de friction et/ou un contrôle des vitesses de rotation des roues avec un modèle d'oscillations et/ou une communication véhicule à véhicule lors de la détermination du coefficient de friction estimé s'appliquant à un essieu avant.

3. Procédé selon la revendication 1 ou 2, **caractérisé en ce que** la valeur maximale du couple de traînée d'un essieu peut être modifiée au cours du fonctionnement du véhicule automobile.

4. Procédé selon l'une quelconque des revendications 1 à 3, **caractérisé en ce que** la valeur maximale du couple de traînée de chaque essieu arrière est inférieure à la valeur minimale des couples de traînée s'appliquant aux essieux avant.

5. Procédé selon l'une quelconque des revendications précédentes, **caractérisé en ce que** dans la plage de faibles décélérations du véhicule, la force de freinage totale appliquée, c'est-à-dire la force de freinage souhaitée par le conducteur ou exigée par le système de freinage, y compris la force de freinage appliquée par la récupération, est répartie sur les essieux du véhicule de telle sorte que la proportion de la force de freinage totale qui s'applique aux roues du véhicule de l'au moins un essieu arrière soit supérieure à la proportion de la force de freinage totale qui s'applique aux roues du véhicule de l'essieu avant.

6. Procédé selon l'une quelconque des revendications précédentes, **caractérisé en ce que** la commande et/ou la régulation du couple de traînée s'appliquant à l'essieu respectif se produit par le fait qu'au moins une grandeur caractéristique de dynamique des roues est surveillée en termes de décrochage de l'engagement par adhérence entre le pneu et la route, par exemple la vitesse de rotation, l'accélération de rotation, la vitesse du véhicule et/ou la charge appliquée aux roues.

7. Procédé selon l'une quelconque des revendications précédentes, **caractérisé en ce que** la commande et/ou la régulation du couple de traînée s'appliquant à l'essieu respectif se produit par un régulateur de glissement, avec lequel le glissement s'appliquant à une roue du véhicule d'un essieu arrière est surveillé en termes de décrochement de l'engagement par adhérence entre le pneu et la route.

8. Procédé selon la revendication 6, **caractérisé en ce que** le contrôle du glissement au niveau d'une roue du véhicule se produit de telle sorte que le glissement soit ajusté à une valeur de consigne de glissement prédéterminée associée à la roue du véhicule respective, ou la valeur maximale du glissement est déterminée sur la base d'une évaluation du coefficient de friction pour les roues du véhicule de l'essieu respectif.

9. Procédé selon au moins l'une quelconque des revendications précédentes, **caractérisé en ce que** d'abord le couple de traînée total souhaité ou requis est supporté par l'essieu avant et ensuite est réparti sur l'essieu avant et sur l'essieu arrière.

10. Système de freinage de véhicule, pour véhicules automobiles à entraînement hybride ou à entraînement électrique, avec des freins de roue (1, 2) de préférence à commande hydraulique, exerçant un couple de freinage, au niveau de l'un ou de plusieurs des essieux du véhicule, en particulier d'un essieu avant, et comprenant une unité de commande et/ou de régulation (14), les roues du véhicule associées à un essieu arrière étant entraînées au moins en partie par un moteur électrique (16), qui peut fonctionner en tant que générateur pour la récupération d'énergie de freinage, et qui exerce, en mode de générateur, un couple de récupération au niveau des roues du véhicule associées à l'essieu respectif, de sorte qu'il se produise un couple de traînée constitué du couple de freinage et du couple de récupération des entraînements électriques, lequel peut être régulé de manière séparée au niveau de l'essieu avant et de l'essieu arrière,
**caractérisé en ce que**
l'unité de commande et/ou de régulation (14) commande ou régule un couple de récupération s'appliquant à un essieu du véhicule de telle sorte que le couple de traînée s'appliquant à l'essieu du véhicule ne dépasse pas une valeur maximale de couple de traînée associée à cet essieu, un procédé selon l'une quelconque des revendications 1 à 9 étant mis en oeuvre.
